# EUROPEAN PATENT APPLICATION

(11) **EP 2 068 387 A1**
(43) Date of publication of application: **10.06.2009**
(21) Application number: 09154399.1
(22) Date of filing: 03.08.2005
(51) Int. Cl.: H01M 6/16, H01M 10/40, H01G 9/02

(54) **Non-Aqueous Electrolytic Solution For Electrochemical Energy Devices**

(30) Priority: 03.08.2004 JP 2004227046
(62) Divisional of application: 05778409.2
(71) Applicant: 3M Innovative Properties Company, Saint Paul, MN 55133-3427 (US)
(72) Inventor: The designation of the inventor has not yet been filed
(74) Representative: Meyers, Hans-Wilhelm

(57) **Abstract**

A non-aqueous mixed solvent for use in a non-aqueous electrolytic solution for electrochemical energy devices which can enhance the high current charging and discharging capacity and low-temperature charging and discharging capacity of an electrochemical energy device, and prevent the device from damage at high temperatures.
The solvent comprises an aprotic solvent and at least one fluorinated ether having a boiling point of 80°C or more and being represented by R₂-O-(R_{f2}-O)ₙ-R₃ (formula 2). Also electrolytic solutions comprising such solvents and electrochemical energy devices containing such electrolytic solutions.

## Description

### Field of Invention

The present invention relates to a non-aqueous electrolytic solution for electrochemical energy devices.

### Background

Electrochemical energy devices have been made in a variety of capacities. Examples of devices where the charging or discharging voltage of the unit cell exceeds 1.5 V include a lithium primary battery, a lithium secondary battery, a lithium ion secondary battery, a lithium ion gel polymer battery (generally called a lithium polymer battery, and sometimes called a lithium ion polymer battery) and a high-voltage electric double layer capacitor (those where the voltage at charging exceeds 1.5 V). Water cannot be used as the solvent of an electrolytic solution used in such high-voltage electrochemical energy devices, because hydrogen and oxygen are generated as a result of electrolysis. Therefore, a non-aqueous electrolytic solution obtained by dissolving a supporting electrolyte in an aprotic solvent such as alkyl carbonates and alkyl ethers is used. Furthermore, even in devices where the voltage does not exceed 1.5 V, when an electrode utilizing occlusion or release of lithium is used, the active lithium species in the electrode readily react with water and therefore, a non-aqueous electrolytic solution is similarly used.

However, the aprotic solvent is typically not sufficiently high in ion conductivity even when formed into a non-aqueous electrolytic solution by dissolving therein a supporting electrolyte, and as a result a device using such solvents tends to be inferior in large current charging/discharging performance and/or in low temperature charging/discharging performance. In order to overcome this problem, several changes have been proposed. For example, positive and negative electrodes obtained by coating an active material powder to a thickness of tens to hundreds of micrometers on a metal foil each is cut into a large-area rectangle shape, an electrode body is constituted by disposing the positive electrode and the negative electrode to face each other through a polyolefin porous separator having a thickness of few to tens of micrometers, and the electrode body is wound into a roll and enclosed in a battery can to fabricate a small cylindrical or rectangular lithium ion battery for use in laptop computers or cellular phones. In this way, by enlarging the facing area of the positive electrode and the negative electrode and at the same time, minimizing the distance between the positive electrode and the negative electrode, the total electrolytic solution resistance is reduced and the ion conductivity is elevated to enable charging or discharging with a relatively large current. Also, the pore size of the separator is enlarged to an extent of not impairing its functions (separation of positive and negative electrodes from each other and melting shut-down function at high temperatures) with an attempt to decrease the resistance between electrodes.

However, still further improvements are desired of the small lithium ion batteries employed at present for portable instruments. For example, in the case of a cellular phone using a lithium ion battery as the main power source, despite the above-described design, a charging time of approximately from 100 to 120 minutes is usually necessary to reach a fully charged state from a completely discharged state in many cases. The charging time required can be theoretically shortened by increasing the charging current, but the charging with a large current is greatly affected by the electrolytic solution resistance and charging to a capacity sufficiently large for use cannot be attained. Also, as a matter of fact, when a cellular phone is used outdoors in cold districts, the current lithium ion causes great reduction in the discharging capacity, that is, the operating time of cellular phone is greatly shortened as compared with that at ordinary temperature.

Other than small portable instruments, studies are being made to use a lithium ion battery for fuel cell automobiles or hybrid cars using a gasoline engine and an electrochemical energy device. In this case, a fairly large current is necessary at the charging and discharging and since automobiles are fundamentally used outdoors, the charging/discharging property at low temperatures is demanded to be more improved than in the case of a device used for small portable instruments. As for a high-output lithium ion battery for automobiles, a technique of enhancing the properties by controlling the particle size of electroactive material or thinning the electrode coating is described in "Shin-gata Denchi no Zairyo Kagaku (Material Chemistry of New Type Battery)", Kikan Kagaku Sosetsu (Quarterly Chemical Review), No. 49, Gakkai Shuppan Center (2001).

Conventional techniques of improving the non-aqueous electrolytic solution itself for enhancing the large-current charging/discharging property and the low-temperature charging/discharging property include, for example, the followings.

Japanese Unexamined Patent Publication (Kokai) No. 6-290809 discloses a non-aqueous electrolytic solution secondary battery using a carbon material capable of occluding/releasing lithium for the negative electroactive material, where a mixed solvent of a cyclic carbonic acid ester and an asymmetric chained carbonic acid ester is used as the solvent of the electrolytic solution to improve the low-temperature property of the battery. The mixed solvent of a cyclic carbonic acid ester and a chained carbonic acid ester is not special as an electrolytic solution component of lithium-based batteries. In general, propylene carbonate (PC) and ethylene carbonate (EC) are known as the cyclic carbonic acid ester and dimethyl carbonate (DMC) and diethyl carbonate (DEC) are known as the chained carbonic acid ester. The secondary battery disclosed in this patent publication is characterized by using an asymmetric chained carbonic acid ester such as ethyl methyl carbonate (EMC) in place of a symmetric chained carbonic acid ester such as DMC and DEC. DMC and DEC have a melting point of 3°C and -43°C, respectively, whereas the melting point of EMC is -55°C, revealing that the durability at low temperatures is surely excellent. However, the degree of its effect is not so large.

Japanese Kokai No. 8-64240 discloses a non-aqueous electrolytic solution battery using lithium for the negative electroactive material, where a mixed solvent of a cyclic carbonic acid ester, a chained carbonic acid ester and an ether is used as the solvent of the electrolytic solution to improve the low-temperature discharging property. This battery is characterized by further mixing an ether which is a low-viscosity solvent, in addition to a cyclic carbonic acid ester and a chained carbonic acid ester. In this patent publication, for example, tetrahydrofuran (THF) is described as the ether. THF has a melting point of - 109°C and is considered to give a large effect on the improvement of charging/discharging property at low temperatures, but the boiling point thereof is as low as 66°C. Accordingly, such batteries are not well suited for use at high temperatures, as there is a tendency for the inner pressure of battery to increase due to evaporation of solvent and cause resulting deterioration of battery performance.

Japanese Kokai No. 2001-85058 discloses a technique of mixing a specific fluorination solvent in a non-aqueous electrolytic solution to improve the properties of a non-aqueous electrolytic solution battery or the like at low temperatures or at high loading. However, the fluorination solvent disclosed here is not limited in its boiling point and includes many compounds of bringing about deterioration of properties of a device at high temperatures. For example, as most representative examples of the compound specified in this patent publication, 1,1,2,3,3,3-hexafluoropropyl methyl ether and nonafluorobutyl methyl ether are described, but these have a boiling point of 53°C and 61°C, respectively, and due to such a not sufficiently high boiling point, there arise troubles at high temperatures, such as increase of inner pressure of battery due to evaporation of solvent, and resulting deterioration of battery properties.

The aprotic solvent(s) used in conventional non-aqueous electrolytic solutions are typically combustible and therefore, in danger of readily catching fire when heat is generated due to abnormal charging/discharging of a device or when the electrolytic solution is leaked outside due to damage of a device. Such devices are being used at present as a main power source of potable small electronic instruments such as laptop computers and cellular phones or as a power source for memory backup of these instruments and since these instruments are operated directly by common consumers the need to address the danger of fire is clear. Furthermore, in the case of large-sizing such a device and using it as a main or auxiliary power source of motor-driving automobiles or as a stationary electric power storing apparatus, the danger of catching fire in an emergency is larger and it is much more important to render the non-aqueous electrolytic solution fire-resistant particularly in such a large-sized device.

Conventional methods of rendering the non-aqueous electrolytic solution fire-resistant include, for example, the following:

Japanese Kokai No. 9-293533 discloses a method of incorporating 0.5 to 30 wt percent of a fluorinated alkane having from 5 to 8 carbon atoms into the non-aqueous electrolytic solution. In general, fluorinated alkane, particularly, completely fluorinated alkane itself has no combustibility and the fire resistance is obtained here by the choking effect of a volatile gas of fluorinated alkane. However, the fluorinated alkane is poor in the fire-resisting effect other than the choking effect. Also, the fluorinated alkane, particularly, completely fluorinated alkane is scarcely compatibilized with the aprotic solvent as an essential component of the electrolytic solution for electrochemical energy devices and in the obtained electrolytic solution, an incombustible fluorinated alkane phase and a combustible aprotic solvent phase are separated. Therefore, it cannot be said that the entire solution is fire-resistant. Furthermore, the fluorinated alkane phase is readily separated as the lower layer due to its large specific gravity and is difficult to express the choking effect by surpassing the flammable aprotic solvent phase lying thereon as the upper layer. In addition, a supporting electrolyte can be scarcely dissolved in the fluorinated alkane phase, as a result, a portion incapable of exchanging and adsorbing ion or electron is generated at the interface between the electrode and the electrolytic solution and this impairs the performance of an electrochemical energy device.

Japanese Kokai No. 11-307123 discloses a method of incorporating a hydrofluoroether such as methyl nonafluorobutyl ether. The hydrofluoroether itself has no combustibility and has good compatibility with a hydrocarbon-based solvent and therefore, this can give a fire-resistant performance and at the same time, can give a uniform non-aqueous electrolytic solution. However, similarly to fluorinated alkane, the fire-resisting mechanism of the hydrofluroether is also greatly relying on the choking effect of its volatile component and the fire-resistant performance is not sufficiently high. Also, for rendering fire-resistant the non-aqueous electrolytic solution itself, a large amount of hydrofluoroether such as methyl nonafluorobutyl ether must be incorporated (in this patent publication, it is stated that an incombustible electrolytic solution can be obtained by containing 65 vol percent or more of methyl nonafluorobutyl ether in the solvent composition excluding a salt) and in this case, the proportion of hydrofluoroether in which a salt has poor solubility becomes too large, as a result, the properties of the electrolytic solution as an ion conductor are impaired. Furthermore, assuming an accident of an actual energy device, for example, when the non-aqueous electrolytic solution is leaked from a battery or capacitor for some reason, the hydrofluoroether having a relatively high vapor pressure and a low boiling point rapidly volatilizes and its abundance ratio in the electrolytic solution is continuously and swiftly decreased and is finally decreased to a ratio incapable of maintaining the incombustibility. The swiftly volatilized hydrofluoroether gas has an effect of suppressing ignition from an external firing source by virtue of its choking effect, but contrary to the requirement that a gas in a certain high concentration must stay in air and cover the periphery of the electrolytic solution for effectively maintaining the choking effect, the actual gas diffuses out and its choking effect is lost within a very short time. When a continuous fire source (flame) is present near the leaked electrolytic solution, the above-described phenomena more rapidly proceed with an assist of rise in temperature and ignition of the electrolytic solution is caused within a relatively short time. In addition, the boiling point of the methyl nonafluorobutyl ether specified in this patent publication is 61°C and due to such a not sufficiently high boiling point, there arise adverse effects on the device performance at high temperatures, such as increase of inner pressure of battery due to evaporation of solvent, and resulting deterioration of battery properties.

Japanese Kokai No. 2000-294281 discloses a technique of imparting fire resistance to the non-aqueous electrolytic solution by using from 40 to 90 vol percent of an acyclic fluorinated ether having a -CF₂H group or a -CFH₂ group at the terminal and having a fluorination percentage of 55% or more. In this patent publication, CF₃CF₂CH₂OCF₂CF₂H is disclosed as one example of the specified compound but the boiling point thereof is 68°C and due to such a not sufficiently high boiling point, there arise adverse effects on the device performance at high temperatures, such as increase of inner pressure of battery due to evaporation of solvent, and resulting deterioration of battery properties.

Improvement of electrolytic solution resistance ascribable to the non-aqueous electrolytic solution itself and in turn, the improvement of large-current charging/discharging performance and low-temperature charging/discharging performance of batteries containing such solutions is strongly desired.

### Brief Summary

The present invention provides a non-aqueous mixed solvent for use in a non-aqueous electrolytic solution for electrochemical energy devices, which can enhance high current charging and discharging performance and low temperature charging and discharging performance and prevent the device from damage at high temperatures. It also provides electrolytic solutions containing such solvents and electrochemical energy devices containing such solutions.

In one embodiment, the present invention provides a non-aqueous mixed solvent for use in a non-aqueous electrolytic solution for electrochemical energy devices, comprising:
at least one aprotic solvent, and
at least one fluorinated ether having a boiling point of 80°C or more, represented by the formula:

   R₁-O-R_{f1} (formula 1)

   wherein R₁ is an alkyl group having from 1 to 4 carbon atoms, which may be branched, and R_{f1} is a fluorinated alkyl group having from 5 to 10 carbon atoms, which may be branched;
by the formula:

   R₂-O-(R_{f2}-O)ₙ-R₃ (formula 2)
wherein R₂ and R₃ each is independently an alkyl group having from 1 to 4 carbon atoms, which may be branched, R_{f2} is a fluorinated alkylene group having from 3 to 10 carbon atoms, which may be branched, and n is an integer of 1 to 3;
or by the formula:

R_{fh1}-O-A-O-R_{fh2} (formula 3)

wherein R_{fh1} and R_{fh2} each is independently a fluorinated alkyl group having at least one hydrogen atom and having from 3 to 9 carbon atoms, which may be branched and which may further contain an ether oxygen, and A is an alkylene group having from 1 to 8 carbon atoms, which may be branched.

The fluorinated ether, particularly, the compound represented by formula 3 has good compatibility with the aprotic solvent or other non-aqueous electrolytic solution components such as supporting electrolyte, so that a homogeneous electrolytic solution can be obtained. As a result, sufficiently high fire resistance can be imparted to a non-aqueous electrolyte that would otherwise having high flammability.

Furthermore, by containing the fluorinated ether, a highly fluorinated organic compound having low compatibility with an aprotic solvent and being difficult to coexist with the aprotic solvent but known to have a strong fire-resistant effect, such as perfluoroketone and perfluorocarbon, can be enhanced in the compatibility with an aprotic solvent. As a result, an electrolytic solution having high fire resistance can be obtained.

### Brief Description of the Drawings

Fig. 1 is a graph showing the results of a discharging rate test of electrochemical energy devices.
Fig. 2 is a graph showing the results of a discharging rate test of electrochemical energy devices.
Fig. 3 is a graph showing the results of a constant-current charging rate test of electrochemical energy devices.
Fig. 4 is a graph showing the results of a low-temperature discharging property test of electrochemical energy devices.
Fig. 5 is a graph showing the results of a charging/discharging cycle test.

### Detailed Description of Illustrative Embodiments

Preferred embodiments of the present invention is described below, but the present invention is not limited thereto.

The non-aqueous mixed solvent of the present invention is used in an electrochemical energy device (e.g., a battery or cell, etc., hereinafter sometimes simply referred to as a device) using an aprotic solvent as an electrolytic solution component. When the electrochemical energy device is used, for example, in a lithium primary battery, a lithium secondary battery, a lithium ion secondary battery, a lithium ion gel polymer battery (generally called a lithium polymer battery, and sometimes called a lithium ion polymer battery) or a high-voltage electric double layer capacitor (particularly, those where the voltage at charging exceeds 1.5 V), good high current discharging and charging performance and low temperature discharging and charging performance can be obtained and the device can be resistant damage at high temperatures. More specifically, by using the above-described specific fluorinated ether having a boiling point of 80°C or more, generation of an inner gas can be prevented upon exposure of the device to high temperatures and a device excellent in the large-current charging/discharging capacity and low-temperature charging/discharging capacity can be provided. Also, thus fluorinated ether can impart fire resistance to the non-aqueous mixed solvent. Furthermore, in the case of a device capable of repeated charging/discharging, the cycling performance can be enhanced.

In addition, by containing the above-described specific fluorinated ether, the mixed solvent can be enhanced in the compatibility between an aprotic solvent and a highly fluorinated organic compound (e.g., perfluoroketone, perfluorocarbon) having high fire-resistant effect, as a result, a highly fluorinated compound can be mixed to more enhance the fire resistance of the solvent.

The non-aqueous solvent comprises at least one aprotic solvent and the above-described fluorinated ether. Examples of the aprotic solvent used in the non-aqueous solvent include ethylene carbonate, propylene carbonate, butylene carbonate, a carbonic acid ester represented by the formula: RₓOCOOR_{y} (wherein Rₓ and R_{y} may be the same or different and each is a linear or branched alkyl group having from 1 to 3 carbon atoms), γ-butyrolactone, 1,2-dimethoxyethane, diglyme, triglyme, tetraglyme, tetrahydrofuran, an alkyl-substituted tetrahydrofuran, 1,3-dioxolane, an alkyl-substituted 1,3-dioxolane, tetrahydropyran and an alkyl-substituted hydropyran. These aprotic solvents may be used individually or in combination of two or more thereof.

In general, cyclic carbonates such as ethylene carbonate (EC) and propylene carbonate (PC) have a high dielectric constant and therefore, have a strong effect of accelerating dissolution of a supporting electrolyte and ion dissociation in the solution (generally called a high dielectric constant solvent), but since the viscosity thereof is generally high, these carbonates tend to disturb the transfer of dissociated ion in the solution. On the contrary, chained carbonates such as diethyl carbonate (DEC) and ethers are not so high in the dielectric constant but low in the viscosity (generally called a low viscosity solvent). In energy devices using a non-aqueous electric solution, a high dielectric constant solvent and a low viscosity solvent are usually used in combination. Particularly, as represented by a lithium ion secondary battery, when a carbon material capable of desorbing/inserting lithium, such as graphite, is used for the negative electrode, EC is used as the high dielectric constant solvent. It is considered that by using EC, a decomposition product of EC resulting from a electrochemical reaction forms a good film on the carbon material surface and the repeated charging/discharging (desorption/insertion of lithium) is efficiently performed. If only PC is used as the high dielectric constant solvent without using EC, a continuous decomposition reaction of PC takes place and the desorption/insertion of lithium for graphite is not successfully performed. Therefore, in the case of using PC, this is generally used in the form of a mixture of EC and PC.

The amount of the aprotic solvent is not particularly limited but is usually from about 10 to about 98 vol percent, more commonly from about 20 to about 95 vol percent, based on the entire solvent. If the amount of the aprotic solvent is too large, the amount of the fluorinated ether is limited and a large-current charging/discharging capacity and a low-temperature charging/discharging capacity may not be satisfactorily obtained. Also, in the case of a device capable of repeated charging/discharging such as secondary battery and electric double layer capacitor, the cycle property may not be satisfactorily enhanced. In addition, the fire-resistant effect is not sufficiently high in some cases. On the other hand, if the amount of the aprotic solvent is too small, the electrolyte may not be completely dissolved.

The non-aqueous mixed solvent comprises, together with the aprotic solvent, at least one fluorinated ether having a boiling point of 80°C or more, represented by the formula:

R₁-O-R_{f1} (formula 1)

wherein R₁ is an alkyl group having from 1 to 4 carbon atoms, which may be branched, and R_{f1} is a fluorinated alkyl group having from 5 to 10 carbon atoms, which may be branched;
the formula:

R₂-O-(R_{f2}-O)ₙ-R₃ (formula 2)

wherein R₂ and R₃ each is independently an alkyl group having from 1 to 4 carbon atoms, which may be branched, R_{f2} is a fluorinated alkylene group having from 3 to 10 carbon atoms, which may be branched, and n is an integer of 1 to 3;
or by the formula:

R_{fh1}-O-A-O-R_{fh2} (formula 3)

wherein R_{fh1} and R_{fh2} each is independently a fluorinated alkyl group having at least one hydrogen atom and having from 3 to 9 carbon atoms, which may be branched and which may further contain an ether oxygen, and A is an alkylene group having from 1 to 8 carbon atoms, which may be branched.

Such a fluorinated ethers impart good load characteristic and good low-temperature property to a device using an electrolytic solution obtained by using the mixed solvent of the present invention. Also, since the boiling point is 80°C or more, the device can be prevented from damage at high temperatures. Examples of fluorinated ethers suitable for use in the invention include C₆F₁₃-O-CH₃, C₆F₁₃-O-C₂H₅, CH₃-O-C₆F₁₂-O-CH₃, CH₃-O-C₃F₆-O-C₃F₆-O-CH₃, C₃HF₆-O-C₂H₄-O-C₃HF₆, C₃HF₆-O-C₃H₆-O-C₃HF₆, CF₃-O-C₂HF₃-O-C₂H₄-O-C₂HF₃-O-CF₃, C₃F₇-O-C₂HF₃-O-C₂H₄-O-C₂HF₃-O-C₃F₇, C₆HF₁₂-O-C₂H₄-O-C₆HF₁₂, C₃F₇-O-C₂HF₃-O-C₂H₄-O-C₃HF₆, C₇H₃F₁₂-O-CH₃ and C₉H₃F₁₆-O-CH₃, for example C₂F₅CF(CF(CF₃)₂)-OCH₃, C₂F₅CF(CF(CF₃)₂)-OC₂H₅, CH₃-O-CF(CF₃)-CF(OCH₃)-CF(CF₃)₂, CH₃-O-C₂F₄-CF(OCH₃)-CF(CF₃)₂, CH₃-O-(CF(CF₃)-CF₂-O)-(CF(CF₃)-CF₂-O)-CH₃, CF₃CFHCF₂OC₂H₄OCF₂CFHCF₃, CF₃CFHCF₂OC₃H₆OCF₂CFHCF₃, CF₃-O-CFH-CF₂-O-C₂H₄-O-CF₂-CFH-O-CF₃, C₃F₇-O-CFH-CF₂-O-C₂H₄-O-CF₂-CFH-O-C₃F₇, C₆F₁₂H-O-C₂H₄-O-C₆F₁₂H and C₃F₇-O-CFHCF₂-O-C₂H₄-O-CF₂CFHCF₃.

In particular, when the fluorinated ether has a structure represented by formula 3, the compatibility between the aprotic solvent and the electrolyte is elevated, as a result, an electrolyte having an optimal concentration can be incorporated and the device performance can be enhanced. Also, since the miscibility between the fluorinated ether of formula 3 and the aprotic solvent component is high, the blending ratio thereof can have a wide flexibility. Furthermore, such a fluorinated ether can also elevate the compatibility of a highly fluorinated organic compound in the mixed solvent and therefore, the fire resistance of the electrolytic solution can be more enhanced. It has been found this time that when at least one ion-dissociable supporting electrolyte is an inorganic lithium salt having a concentration of 0.2 to 2 mol/L, good results can be obtained by using at least one member of CF₃CFHCF₂OC₂H₄OCF₂CFHCF₃ and CF₃CFHCF₂OC₃H₆OCF₂CFHCF₃ as the fluorinated ether.

The amount of the fluorinated ether is not particularly limited but is usually from 2 to 90 vol percent, more commonly from about 5 to about 80 vol percent, based on the entire solvent. If the amount of the fluorinated ether is too small, a large-current charging/discharging capacity and a low-temperature charging/discharging capacity may not be satisfactorily obtained. Also, in the case of a device capable of repeated charging/discharging such as secondary battery and electric double layer capacitor, the cycle property may not be satisfactorily enhanced. In addition, the fire-resistant effect is not sufficiently high in some cases. On the other hand, if the amount of the fluorinated ether is too large, the electrolyte may not be completely dissolved.

The mixed solvent of the present invention may further comprise an organic compound which has at least one fluorine atom and which may contain any atom of B, N, O, Si, P and S in addition to a carbon atom. Examples of this organic compound include a perfluorocarbon (CₙF₂ₙ₊₁), a perfluoroketone ((CₘF₂ₘ)(CₙF₂ₙ)C=O), a perfluoroalkylamine ((CₓF₂ₓ)(CₘF₂ₘ)(CₙF₂ₙ)N), a fluorinated phosphazene-based compound such as 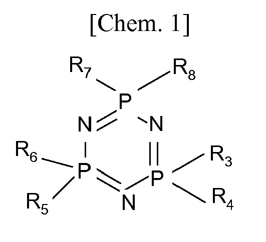 wherein R₃ to R₈ each is a fluorinated alkoxyl group, a fluorinated morpholine-based compound such as 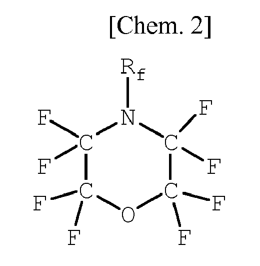 wherein R_{f} is a fluorinated alkyl group. Among these, preferred are a highly fluorinated ketone fluoride and a highly fluorinated hydrocarbon which are completely fluorinated organic compounds, such as perfluoroketone and perfluorocarbon, because these compounds impart high fire resistance to the non-aqueous solvent. The amount of this additional compound used is not limited but is usually from about 1 to about 25 vol percent based on the entire solvent.

In the mixed solvent of the present invention, an ion-dissociable supporting electrolyte is dissolved to form a non-aqueous electrolytic solution for electrochemical energy devices. The ion-dissociable supporting electrolyte may be one conventionally used for electrochemical energy devices. The ion-dissociable supporting electrolyte is a salt represented by the formula: XY wherein X is one or multiple member(s) selected from the group consisting of a compound represented by the formula: (RfₐSO₂)(Rf_{b}SO₂)N⁻ wherein Rfₐ and Rf_{b} may be the same or different and each is a linear or branched fluorinated alkyl group having from 1 to 4 carbon atoms, a compound represented by the formula: (Rf_{c}SO₂)(Rf_{d}SO₂)(RfₑSO₂)C⁻ wherein Rf_{c}, Rf_{d} and Rfₑ may be the same or different and each is a linear or branched fluorinated alkyl group having from 1 to 4 carbon atoms, a compound represented by the formula Rf_{f}SO₃⁻ wherein Rf_{f} is a linear or branched fluorinated alkyl group having from 1 to 4 carbon atoms, PF₆⁻, ClO₄⁻, BF₄⁻ and AsF₆⁻, and Y is one or multiple kinds of cation(s). When the electrode is actuated by the precipitation/dissolution of lithium or desorption/insertion of lithium, Y is Li⁺. On the other hand, when the electric solution is used for an electric double layer capacitor, Y is not limited but is preferably a quaternary alkylammonium ion.

In the case of a lithium ion battery or a lithium ion gel polymer battery, in view of its high ion conductivity and profitability, LiPF₆ is preferred. In the case of a lithium primary battery or a lithium secondary battery, lithium trifluoromethenesulfonate (triflate), lithium bis(trifluoromethanesulfone)imide (TFSI), lithium (pentafluoroethanesulfone)imide (BETI) or the like is suitably used. The supporting electrolyte should be selected according to the use purpose of device or the kind of electrode combined (kind of battery). The concentration of the supporting electrolyte is usually from 0.7 to 1.6 M (mol/L), preferably from about 0.8 to about 1.2 M. Also, in the case where an inorganic salt such as LiPF₆ is used as the supporting electrolyte, in view of compatibility, the fluorinated ether of formula 3 is preferably used. For example, when CF₃CFHCF₂OC₂H₄OCF₂CFHCF₃ or CF₃CFHCF₂OC₃H₆OCF₂CFHCF₃ is used for about 0.2 to about 2 M of inorganic lithium salt, a uniform solution can be obtained. Such a solution may be combined with another electrolytic solution to form an electrolytic solution having a concentration in the above-described range.

By incorporating the fluorinated ether into a non-aqueous electrolytic solution for electrochemical energy devices, as described herein the high current and low temperature discharging and charging performance can be enhanced. By virtue of this, the actual operating time of a portable small instrument using the device, such as cellular phone and laptop computer, is elongated. The actual operating time in a low-temperature environment is also elongated. Furthermore, in the application to a fuel battery or a hybrid car using a gasoline engine and an electrochemical energy device, a device having high input/output property and low-temperature property can be provided.

In the case where the electrochemical energy device is a secondary battery or electric double layer capacitor capable of repeated charging/discharging, by incorporating the fluorinated ether of the present invention into a non-aqueous electrolytic solution, the long-term cycle property can be enhanced and therefore, the lifetime of device can be elongated. This is useful of course in the case of using the device as a power source of a portable small equipment or a hybrid car but is particularly effective in uses where long-term reliability is strongly demanded, such as stationary electric power storing apparatus and small power source for memory backup of an instrument.

The fluorinated ether of the present invention has a boiling point of 80°C or more, so that even when placed in a high-temperature environment, the increase in inner pressure of a device due to generation of gas, the resulting deterioration of the device performance, and the danger such as explosion/leakage of electrolytic solution can be avoided.

Out of fluorinated ethers of the present invention, the compound represented by formula 3 particularly has good compatibility with other components constituting the non-aqueous electrolytic solution and the preparation of electrolytic solution has a wide latitude. For example, in using LiPF₆ commonly employed as a supporting electrolyte of lithium ion batteries, LiPF₆ in a necessary and sufficiently high concentration can be uniformly mixed together with a chained carbonate and a cyclic carbonate.

By incorporating the fluorinated ether into a non-aqueous electrolytic solution for electrochemical energy devices, fire resistance can be imparted to the non-aqueous electrolytic solution originally having high flammability.

By using the fluorinated ether in accordance with the present invention, a highly fluorinated organic compound originally incapable of satisfactorily compatibilizing with an aprotic solvent can be uniformly mixed and additional functions can be imparted to the non-aqueous electrolytic solution. For example, when the fluorinated ether of the present invention is caused to coexist, a perfluoroketone or perfluorocarbon having a strong fire-resistant effect but being poor in the compatibility with an aprotic solvent can be uniformly mixed in a non-aqueous electrolytic solution.

### Examples

The present invention is described in greater detail below by the following illustrative Examples.

In Examples and Comparative Examples, the compounds shown below are sometimes denoted by the symbol or chemical formula in parenthesis. Aprotic Solvent:
Ethylene carbonate (EC)
Propylene carbonate (PC)
Diethyl carbonate (DEC)
Ethyl methyl carbonate (EMC)
Dimethoxyethane (DME)
γ-Butyrolactone (GBL)
Tetrahydrofuran (THF)

### Fluorinated Ether:

| | |
|---|---|
| C₂F₅CF(CF(CF₃)₂)-OCH₃ | (HFE1) (boiling point: 98°C) |
| C₂F₅CF(CF(CF₃)₂)-OC₂H₅ | (HFE2) (boiling point: 104°C) |
| CF₃CFHCF₂OC₂H₄0CF₂CFHCF₃ | (HFE3) (boiling point: 164°C) |
| CF₃CFHCF₂OC₃H₆OCF₂CFHCF₃ | (HFE4) (boiling point: 188°C) |
| CH₃-O-C₆F₁₂-O-CH₃ | (HFE5) (boiling point: 166°C) |
| H-C₆F₁₂-CH₂-O-CH₃ | (HFE6) (boiling point: 168°C) |
| H-C₈F₁₆-CH₂-O-CH₃ | (HFE7) (boiling point: 198°C) |
| C₃F₇-O-C₂HF₃-O-C₂H₄-O-C₂HF₃-O-C₃F₇ | (HFE8) (boiling point: 210°C) |

### Other Solvents:

Trifluoroethyl tetrafluoroethyl ether (HFE9) (boiling point: 56°C)
Pentafluoroethyl heptafluoropropyl ketone (PFK)
Perfluorohexane (FLORINATO FC-72, produced by Sumitomo 3M) (PFC)

### Supporting Electrolyte:

Lithium bis(pentafluoroethanesulfone)imide (FLORAD FC-130 OR FLORAD L-13858, produced by Sumitomo 3M) (BET1)
Lithium hexafluorophosphate (LiPF₆)
Lithium bis(trifluoromethanesulfone)imide (TFS1) (FLORINATO HQ-115 or HQ-115J, produced by Sumitomo 3M)
Lithium bis(nonafluorobutanesulfone)imide (DBI)
Lithium trifluoromethanesulfonate (FLORAD FC-122, produced by Sumitomo 3M) (triflate)
Lithium tris(trifluoromethanesulfone)methide (methide)
Lithium tetrafluoroborate (LiBF₄)
Lithium perchlorate (LiClO₄)

### A. Compatibility Test

### Examples A1 to A20 and Comparative Examples A1 to A3:

Non-aqueous electrolytic solutions each having a composition shown in Table 1 were prepared at 25°C and the outer appearance of the solution was observed.

In Examples A1 to A14, a non-aqueous electrolytic solution prepared by dissolving a supporting electrolyte in a non-aqueous mixed solvent comprising a fluorinated ether of the present invention and an aprotic solvent was tested, as a result, a transparent and uniform solution was obtained.

In Examples A15 to A20, a non-aqueous electrolytic solution where a perfluoroketone or perfluorocarbon was further added was tested, as a result, a transparent and uniform solution was obtained.

In Comparative Examples A1 to A3, a non-aqueous electrolytic solution prepared by not adding a fluorinated ether of the present invention but further adding a perfluoroketone or perfluorocarbon was tested, as a result, the solution was separated.

**Table 1 Compatibility Test Results**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte** **(concentration) (Note)** | **Outer Appearance of Solution** |
| **Example A1** | **EC (5)** | **DEC (45)** | **HFE1 (50)** | | **BET1 (1 molal/L)** | **transparent and uniform** |
| **Example A2** | **EC (5)** | **DEC (45)** | **HFE3 (50)** | | **BET1 (1 molal/L)** | **transparent and uniform** |
| **Example A3** | **EC (5)** | **DEC (45)** | **HFE4 (50)** | | **BET1 (1 molal/L)** | **transparent and uniform** |
| **Example A4** | **EC (25)** | **DEC (25)** | **HFE3 (50)** | | **BET1 (1 molal/L)** | **transparent and uniform** |
| **Example A5** | **EC (25)** | **DEC (70)** | **HFE4 (50)** | | **BET1 (1 molal/L)** | **transparent and uniform** |
| **Example A6** | **EC (5)** | **DEC (70)** | **HFE1 (25)** | | **BET1 (1 molal/L)** | **transparent and uniform** |
| **Example A7** | **EC (5)** | **DEC (45)** | **HFE3 (50)** | | **LiPF₆ (1 molal/L)** | **transparent and uniform** |
| **Example A8** | **EC (5)** | **DEC (45)** | **HFE4 (50)** | | **LiPF₆ (1 molal/L)** | **transparent and uniform** |
| **Example A9** | **EC (5)** | **DEC (70)** | **HFE3 (25)** | | **LiPF₆ (1 molal/L)** | **transparent and uniform** |
| **Example A10** | **EC (5)** | **DEC (70)** | **HFE4 (25)** | | **LiPF₆ (1 molal/L)** | **transparent and uniform** |
| **Example A11** | **EC (5)** | **DEC (45)** | **HFE1 (50)** | | **BETI (2 molal/L)** | **transparent and uniform** |
| **Example A12** | **EC (5)** | **DEC (45)** | **HFE1 (50)** | | **BETI (0.4M)** | **transparent and uniform** |
| **Example A13** | **EC (5)** | **DEC (45)** | **HFE1 (50)** | | **BETI (1 M)** | **transparent and uniform** |
| **Example A14** | **EC (5)** | **DEC (45)** | **HFE1 (50)** | | **BETI (1.6M)** | **transparent and uniform** |
| **Example A15** | **EC (5)** | **DEC (45)** | **HFE3 (36)** | **PFK (14)** | **BETI (1 molal/L)** | **transparent and uniform** |
| **Example A16** | **EC (4)** | **DEC (38)** | **HFE3 (37)** | **PFK (21)** | **BETI (0.83 molal/L)** | **transparent and uniform** |
| **Example A17** | **EC (5)** | **DEC (45)** | **HFE4 (36)** | **PFK (14)** | **BET1 (1 molal/L)** | **transparent and uniform** |
| **Example A18** | **EC (4)** | **DEC (35)** | **HFE4 (42)** | **PFK (19)** | **BET1 (0.77 molal/L)** | **transparent and uniform** |
| **Example A19** | **EC (4)** | **DEC (36)** | **HFE3 (49)** | **PFC (11)** | **BETI (0.8 molal/L)** | **transparent and uniform** |
| **Example A20** | **EC (4)** | **DEC (36)** | **HFE4 (49)** | **PFC (11)** | **BETI (0.8 molal/L)** | **transparent and uniform** |
| **Comparative Example A1** | **EC (5)** | **DEC (45)** | | **PFC (50)** | **BETI (1 molal/L)** | **separated** |
| **Comparative Example A2** | **EC (5)** | **DEC (81)** | | **PFK (14)** | **BETI (1 molal/L)** | **separated** |
| **Comparative Example A3** | **EC (5)** | **DEC (81)** | | **PFC (14)** | **BETI (1 molal/L)** | **separated** |

| | | | | | | |
|---|---|---|---|---|---|---|
| **(Note) Unit of concentration of supporting electrolyte:** **molal/L: A molar amount of supporting electrolyte added to 1 liter of mixed solvent.** **M: A molar amount of supporting electrolyte contained in 1 liter of solution.** | | | | | | |

### Examples A21 to A64

In the compatibility test, various solvent compositions using various electrolytes as shown in Tables A2 to A4 were further tested.

**Table 2**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte** **(concentration) (Note)** | **Outer Appearance of Solution** |
| **Example A21** | **EC (18)** | **DEC (72)** | **HFE1 (10)** | | **BETI (1 molal/L)** | **transparent and uniform** |
| **Example A22** | **EC (16)** | **DEC (64)** | **HFE1 (20)** | | **BETI (1 molal/L)** | **transparent and uniform** |
| **Example A23** | **EC (30)** | **DEC (60)** | **HFE1 (10)** | | **BETI (1 molal/L)** | **transparent and uniform** |
| **Example A24** | **EC (40)** | **DEC (55)** | **HFE1 (5)** | | **BETI (1 molal/L)** | **transparent and uniform** |
| **Example A25** | **EC (10)** | **DEC (80)** | **HFE1 (10)** | | **LiPF₆ (1 molal/L)** | **transparent and uniform** |
| **Example A26** | **EC (20)** | **DEC (75)** | **HFE1 (5)** | | **LiPF₆ (1 molal/L)** | **transparent and uniform** |
| **Example A27** | **-** | **DEC (75)** | **HFE1 (25)** | | **LiPF₆ (1 molal/L)** | **transparent and uniform** |

| | | | | | | |
|---|---|---|---|---|---|---|
| (Note) Unit of concentration of supporting electrolyte: molal/L: A molar amount of supporting electrolyte added to 1 liter of mixed solvent. M: A molar amount of supporting electrolyte contained in 1 liter of solution. | | | | | | |

**Table 3**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte (concentration) (Note)** | **Outer Appearance of Solution** |
| **Example A28** | **EC (5)** | **DEC (35)** | **HFE3 (60)** | | **BETI (1 molal/L)** | **transparent and uniform** |
| **Example A29** | **EC (5)** | **DEC (25)** | **HFE3 (70)** | | **BETI (1 molal/L)** | **transparent and uniform** |
| **Example A30** | **EC (20)** | **DEC (20)** | **HFE3 (60)** | | **BETI (1 molal/L)** | **transparent and uniform** |
| **Example A31** | **EC (30)** | **DEC (30)** | **HFE3 (40)** | | **BETI (1 molal/L)** | **transparent and uniform** |
| **Example A32** | **EC (50)** | **-** | **HFE3 (50)** | | **BETI (1 molal/L)** | **transparent and uniform** |
| **Example A33** | **EC (90)** | **-** | **HFE3 (10)** | | **BETI (1 molal/L)** | **transparent and uniform** |
| **Example A34** | **EC (20)** | **-** | **HFE3 (80)** | | **BETI (1 molal/L)** | **transparent and uniform** |
| **Example A35** | **-** | **DEC (30)** | **HFE3 (70)** | | **BETI(1 molal/L)** | **transparent and uniform** |
| **Example A36** | **EC (64)** | **DEC (16)** | **HFE3 (20)** | | **BETI (1 molal/L)** | **transparent and uniform** |
| **Example A37** | **EC (16)** | **DEC (4)** | **HFE3 (80)** | | **BETI (1 molal/L)** | **transparent and uniform** |
| **Example A38** | **EC (10)** | **DEC (10)** | **HFE3 (80)** | | **BETI (1 molal/L)** | **transparent and uniform** |
| **Example A39** | **EC (40)** | **DEC (40)** | **HFE3 (20)** | | **BETI (1 molal/L)** | **transparent and uniform** |
| **Example A40** | **EC (45)** | **DEC (45)** | **HFE3 (10)** | | **LiPF₆ (1 molal/L)** | **transparent and uniform** |
| **Example A41** | **EC (35)** | **DEC (35)** | **HFE3 (30)** | | **LiPF₆ (1 molal/L)** | **transparent and uniform** |
| **Example A42** | **EC (30)** | **DEC (30)** | **HFE3 (40)** | | **LiPF₆ (1 molal/L)** | **transparent and uniform** |
| **Example A43** | **EC (10)** | **DEC (30)** | **HFE3 (60)** | | **LiPF₆ (1 molal/L)** | **transparent and uniform** |
| **Example A44** | **EC (50)** | **DEC (15)** | **HFE3 (35)** | | **LiPF₆ (1 molal/L)** | **transparent and uniform** |

**Table 4**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte (concentration) (Note)** | **Outer Appearance of Solution** |
| **Example A45** | **EC (33.3)** | **DEC (33.3)** | **HFE3 (33.3)** | | **Triflate(1 molal/L)** | **transparent and uniform** |
| **Example A46** | **EC (33.3)** | **DEC (33.3)** | **HFE3 (33.3)** | | **DBI (1 molal/L)** | **transparent and uniform** |
| **Example A47** | **EC (33.3)** | **DEC (33.3)** | **HFE3 (33.3)** | | **Methide (1 molal/L)** | **transparent and uniform** |
| **Example A48** | **EC (33.3)** | **DEC (33.3)** | **HFE3 (33.3)** | | **TFSI (1 molal/L)** | **transparent and uniform** |
| **Example A49** | **EC (5)** | **DEC (45)** | **HFE3 (50)** | | **LiClO₄ (1 molal/L)** | **transparent and uniform** |
| **Example A50** | **EC (42)** | **DEC (42)** | **HFE3 (16)** | | **LiBF₄ (1 molal/L)** | **transparent and uniform** |
| **Example A51** | **EC (8)** | **DEC (72)** | **HFE3 (20)** | | **LiBF₄ (1 molal/L)** | **transparent and uniform** |
| **Example A52** | **EC (7)** | **DEC (60)** | **HFE3 (33)** | | **LiBF₄ (1 molal/L)** | **transparent and uniform** |
| **Example A53** | **PC (25)** | **DME(25)** | **HFE3 (50)** | | **Triflate (1 molal/L)** | **transparent and uniform** |
| **Example A54** | **EC (25)** | **EMC (25)** | **HFE3 (50)** | | **BETI (1 molal/L)** | **transparent and uniform** |
| **Example A55** | **EC (25)** | **GBL(25)** | **HFE3 (50)** | | **BETI (1 molal/L)** | **transparent and uniform** |
| **Example A56** | **EC (25)** | **THF(25)** | **HFE3 (50)** | | **BETI (1 molal/L)** | **transparent and uniform** |
| **Example A57** | **EC (2)** | **DEC (48)** | **HFE2 (50)** | | **BETI (1 molal/L)** | **transparent and uniform** |
| **Example A58** | **EC (25)** | **DEC (50)** | **HFE5 (25)** | | **BETI (1 molal/L)** | **transparent and uniform** |
| **Example A59** | **EC (25)** | **DEC (50)** | **HFE6 (25)** | | **BETI (1 molal/L)** | **transparent and uniform** |
| **Example A60** | **EC (25)** | **DEC (50)** | **HFE7 (25)** | | **BETI (1 molal/L)** | **transparent and uniform** |
| **Example A61** | **EC (25)** | **DEC (50)** | **HFE8 (25)** | | **BETI (1 molal/L)** | **transparent and uniform** |
| **Example A62** | **EC (25)** | **DEC (25)** | **HFE6 (50)** | | **BETI (1 molal/L)** | **transparent and uniform** |
| **Example A63** | **EC (25)** | **DEC (25)** | **HFE7 (50)** | | **BETI (1 molal/L)** | **transparent and uniform** |
| **Example A64** | **EC (25)** | **DEC (25)** | **HFE8 (50)** | | **BETI (1 molal/L)** | **transparent and uniform** |

| | | | | | | |
|---|---|---|---|---|---|---|
| (Note) Unit of concentration of supporting electrolyte: molal/L: A molar amount of supporting electrolyte added to 1 liter of mixed solvent. M: A molar amount of supporting electrolyte contained in 1 liter of solution. | | | | | | |

As seen from the results above, when HFE3 (shown by formula 3) was used, good compatibility with other components even in a high vol percent was exhibited.

### B. High-Temperature Pressure Test

### Examples B1 to B3 and Comparative Examples B1 to B3:

Into a stainless steel-made airtight vessel having an inner volume of 5 ml and being connected with a pressure gauge and an opening cock, 5 mL of a non-aqueous electrolytic solution having a composition shown in Table 5 was charged at 25°C and then the cock was closed. After closing, once the opening cock was opened at 25°C and the pressure was made zero. Thereafter, the cock was again closed and the vessel was swiftly placed in a constant-temperature oven at 80°C. After passing of 3 hours, the pressure within the airtight vessel was measured. The results are shown in Table 5.

**Table 5: High-Temperature Pressure Test Results**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte (concentration) (Note)** | **Pressure after 3 Hours at 80°C (kPa)** |
| **Example B1** | **EC (5)** | **DEC (45)** | **HFE1 (50)** | | **BETI (1 M)** | **54** |
| **Example B2** | **EC (5)** | **DEC (45)** | **HFE3 (50)** | | **BETI (1 M)** | **31** |
| **Example B3** | **EC (5)** | **DEC (45)** | **HFE4 (50)** | | **BETI (1 M)** | **33** |
| **Comparative Example B1** | **EC (5)** | **DEC (45)** | | **HFE9 (50)** | **BETI (1 M)** | **96** |
| **Comparative Example B2** | **EC (50)** | **DEC (50)** | | | **BETI (1 M)** | **36** |
| **Comparative Example B3** | **EC (5)** | **DEC (95)** | | | **BETI (1 M)** | **39** |

| | | | | | | |
|---|---|---|---|---|---|---|
| (Note) Unit of concentration of supporting electrolyte: molal/L: A molar amount of supporting electrolyte added to 1 liter of mixed solvent. M: A molar amount of supporting electrolyte contained in 1 liter of solution. | | | | | | |

In Examples B1 to B3, the increase in pressure of the airtight vessel was kept low as compared with Comparative Examples B1 using HFE9 having a boiling point of 56°C. Furthermore, in Examples B2 and B3, the increase in pressure was kept lower than in the case of a so-called normal non-aqueous electrolytic solution of Comparative Examples B2 and B3 where a fluorinated ether was not used.

### C. Combustibility Test

### Examples C1 to C9 and Comparative Examples C1 to C6:

In an aluminum dish having an inner diameter of 50 mm and a depth of 15 mm, 1 mL of a non-aqueous mixed solvent or non-aqueous electrolytic solution according to the formulation shown in Table C was poured and a pilot fire having a width of about 1 cm and a length of about 4 cm was placed by using a long tube lighter at the position 15 mm upper from the liquid level. At this time, the pilot fire was slowly moved to evenly expose the liquid level to the pilot fire while taking care not to protrude from the aluminum dish. Assuming that the start of test was the moment the pilot fire was placed above the liquid level, the time period until continuous burning started was defined as the combustion starting time and the measurement was performed at every 10 seconds. The testing time was maximally 150 seconds. The results are shown in Table 6.

**Table 6 Combustibility Test Results**

| | **Non-aqueous Solvent** | | | | | |
|---|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte (concentration) (Note)** | **Combustion Starting Time (sec)** |
| **Example C1** | **EC (5)** | **DEC (45)** | **HFE1 (50)** | | **BETI (1 M)** | **150** |
| **Example C2** | **EC (5)** | **DMC (45)** | **HFE3 (50)** | | | **60** |
| **Example C3** | **EC (5)** | **DMC (45)** | **HFE3 (50)** | | **BETI (1 M)** | **>150** |
| **Example C4** | **EC (5)** | **DMC (45)** | **HFE4 (50)** | | | **60** |
| **Example C5** | **EC (5)** | **DMC (45)** | **HFE4 (50)** | | **BETI (1 M)** | **>150** |
| **Example C6** | **EC (5)** | **DEC (45)** | **HFE3 (36)** | **PFK (14)** | | **80** |
| **Example C7** | **EC (5)** | **DEC (45)** | **HFE4 (36)** | **PFK (14)** | **BETI (1 M)** | **>150** |
| **Example C8** | **EC (5)** | **DEC (45)** | **HFE4 (36)** | **PFK (14)** | | **80** |
| **Example C9** | **EC (5)** | **DEC (45)** | **HFE4 (36)** | **PFK (14)** | **BETI (1 M)** | **>150** |
| **Comparative Example C1** | **EC (5)** | **DEC (95)** | | | | **10** |
| **Comparative Example C2** | **EC (5)** | **DEC (95)** | | | **BETI (1 molal/L))** | **10** |
| **Comparative Example C3** | **EC (50)** | **DEC (50)** | | | | **20** |
| **Comparative Example C4** | **EC (50)** | **DEC (50)** | | | **BETI (1 M)** | **20** |

| | | | | | | |
|---|---|---|---|---|---|---|
| (Note) Unit of concentration of supporting electrolyte: molal/L: A molar amount of supporting electrolyte added to 1 liter of mixed solvent. M: A molar amount of supporting electrolyte contained in 1 liter of solution. | | | | | | |

In the case of a non-aqueous mixed solvent containing a fluorinated ether of the present invention and not containing a supporting electrolyte (Examples C2, C4, C6 and C8), the combustion starting time was greatly elongated as compared with Comparative Examples C1 and C3. Furthermore, in Examples C6 and C8 where a part of the fluorinated ether of the present invention was replaced by PFK, the combustion starting time was more elongated.

In the case of containing BETI as the supporting electrolyte, the combustion starting time was more elongated. Particularly, in Examples C3, C5, C7 and C9, ignition did not occur even when the testing time of 150 seconds was ended.

### D. Preparation of Battery

### Examples D1 to D7 and Comparative Examples D1 to D4:

### Preparation of Positive Electrode:

A slurry-like liquid comprising lithium cobaltate as the active material, acetylene black as the auxiliary electrically conducting agent, polyvinylidene fluoride as the binder and N-methyl-2-pyrrolidone as the solvent was coated on an aluminum foil and then dried. This was punched into a circular shape and used as the positive electrode.

### Preparation of Negative Electrode:

A slurry-like liquid comprising mesofuse carbon microbead as the active material, electrically conducting graphite as the auxiliary electrically conducting agent, polyvinylidene fluoride as the binder and N-methyl-2-pyrrolidone as the solvent was coated on a copper foil and then dried. This was punched into a circular shape and used as the negative electrode.

### Preparation of Non-aqueous Electrolytic Solution:

A non-aqueous electrolytic solution was prepared according to the formulation shown in

**Table 7 Formulation of Non-aqueous Electrolytic Solution of Battery Prepared**

| | **Non-aqueous Solvent** | | | | |
|---|---|---|---|---|---|
| | **Aprotic Solvent 1 (vol%)** | **Aprotic Solvent 2 (vol%)** | **Fluorinated Ether of the Invention (vol%)** | **Other Solvents (vol%)** | **Supporting Electrolyte (concentration) (Note)** |
| **Example D1** | **EC (5)** | **DMC (45)** | **HFE1 (50)** | | **BETI (1 molal/L)** |
| **Example D2** | **EC (5)** | **DMC (45)** | **HFE3 (50)** | | **BETI (1 molal/L)** |
| **Example D3** | **EC (5)** | **DMC (45)** | **HFE4 (50)** | | **BETI (1 molal/L)** |
| **Example D4** | **EC (5)** | **DEC (45)** | **HFE3 (50)** | | **LiPF₆ (1 molal/L)** |
| **Example D5** | **EC (5)** | **DEC (45)** | **HFE4 (50)** | | **LiPF₆ (1 molal/L)** |
| **Example D6** | **EC (5)** | **DEC (70)** | **HFE3 (25)** | | **LiPF₆ (1 molal/L)** |
| **Example D7** | **EC (5)** | **DEC (70)** | **HFE4 (25)** | | **LiPF₆ (1 molal/L)** |
| **Comparative Example D1** | **EC (50)** | **DEC (50)** | | | **BETI (1 molal/L)** |
| **Comparative Example D2** | **EC (5)** | **DEC (95)** | | | **BETI (1 molal/L)** |
| **Comparative Example D3** | **EC (50)** | **DEC (50)** | | | **LiPF₆ (1 molal/L)** |
| **Comparative Example D4** | **EC (5)** | **DEC (95)** | | | **LiPF₆ (1 molal/L)** |

| | | | | | |
|---|---|---|---|---|---|
| (Note) Unit of concentration of supporting electrolyte: molal/L: A molar amount of supporting electrolyte added to 1 liter of mixed solvent. M: A molar amount of supporting electrolyte contained in 1 liter of solution. | | | | | |

### Preparation of Battery:

A non-aqueous electrolytic solution and a polypropylene-made porous film separator were interposed between positive electrode and negative electrode to prepare a coin battery. The amounts of positive and negative electroactive materials used for one coin battery were adjusted to give a positive electrode capacity larger than the negative electrode capacity, whereby the charging/discharging capacity of the coin battery was rendered to be governed by the positive electrode capacity.

### Pretreatment Charging/Discharging:

Assuming that the theoretical capacity calculated from the weight of lithium cobaltate filled in the coin battery was C_{D}mAh, the charging was performed at 25°C with a constant current corresponding to 0.2 C_{D}mA until the battery voltage reached 4.2 V and after a pause for 10 minutes, the discharging was performed with a constant current of 0.2 C_{D}mA until the battery voltage became 2.5 V, followed by a pause for 10 minutes. This operation was repeated three times.

### E. Discharging Rate Test

### Examples E1 to E7 and Comparative Examples E1 to E4:

Batteries of Examples E1 to E7 and Comparative Examples E1 to E4 were prepared by using non-aqueous electrolytic solutions of Examples D1 to D7 and Comparative Examples D1 to D4 in Table D, respectively. Each battery after the completion of pretreatment charging/discharging was charged with a constant current of 0.5 C_{D}mA at 25°C and after the voltage reached 4.2 V, charged at a constant voltage of 4.2 V. The total charging time was controlled to 3 hours. After the completion of charging, a pause was taken for 10 minutes. Subsequently, constant-current discharging was performed with a current of 0.5 C_{D}mA until the voltage became 2.5 V and then a pause was taken for 10 minutes. This charging/discharging operation was repeated 10 times and it was confirmed that the battery was stably undergoing the charging/discharging operation.

Using the same batteries, charging and pausing were performed at 25°C under the same conditions as above and then each battery was discharged with a constant current corresponding to 0.2 C_{D}mA, 1 C_{D}mA, 3 C_{D}mA, 6 C_{D}mA, 9 C_{D}mA, 11 C_{D}mA or 12 C_{D}mA until the voltage became 2.5 V. The obtained discharging capacity was measured.

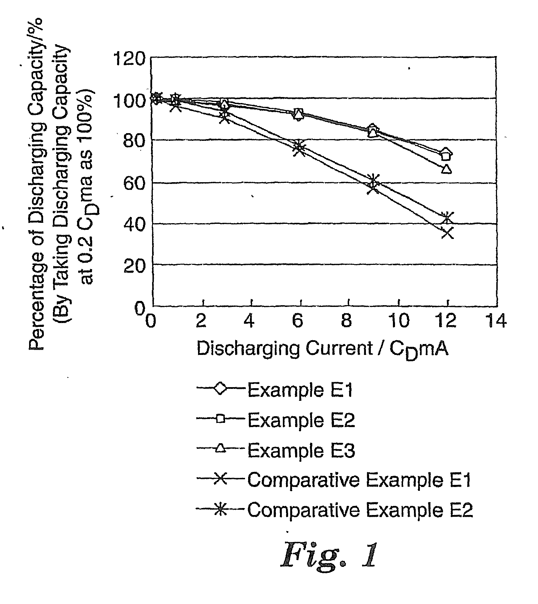

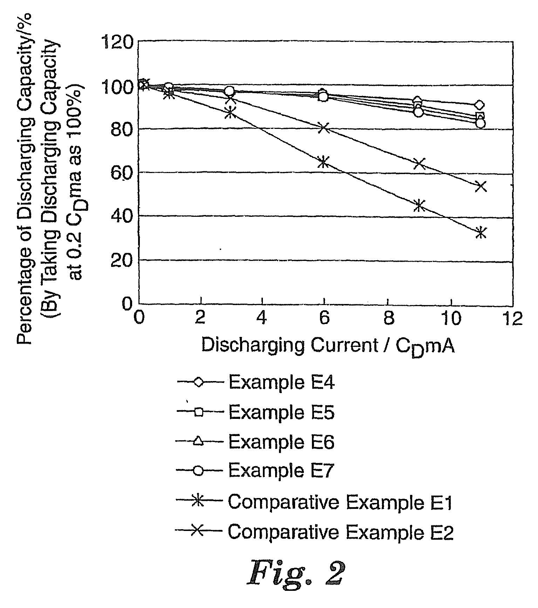

In all batteries tested, the discharging capacity at a discharging current of 0.2 C_{D}mA was from 131 to 142 mAh in terms of the capacity per g of lithium cobaltate as the positive electroactive material. Figs. 1 and 2 show the relationship between the discharging current value and the obtained discharging capacity when the discharging capacity at this current was taken as 100%.

As apparently seen from Figs. 1 and 2, in Examples using a fluorinated ether of the present invention, the discharging capacity obtained at large-current discharging is very excellent.

### F. Constant-Current Charging Rate Test

### Examples F4 to F7 and Comparative Examples F3 and F4:

Out of batteries used in the discharging rate test, the batteries of Examples E4 to E7 and Comparative Examples E3 and E4 were continuously used in this test as batteries of Examples F4 to F7 and Comparative Examples F3 and F4, respectively. Constant-current charging of 0.5 C_{D}mA was performed at 25°C and after the voltage reached 4.2 V, constant-voltage charging of 4.2 V was performed. The total charging time was controlled to 3 hours. After the completion of charging, a pause was taken for 10 minutes. Subsequently, discharging was performed with a constant current of 0.5 C_{D}mA until the voltage became 2.5 V and then a pause was taken for 10 minutes. This charging/discharging operation was repeated 7 times and it was confirmed that the battery was stably undergoing the charging/discharging operation. The discharging capacity at 7th operation was measured, as a result, in all batteries tested, the discharging capacity was from 127 to 135 mAh in terms of the capacity per g of lithium cobaltate as the positive electroactive material. The discharging capacity at this time was denoted by C_{F}mAh. Also, the discharging capacity at this time was taken as 100% and used as a standard value in the subsequent constant-current charging rate test.

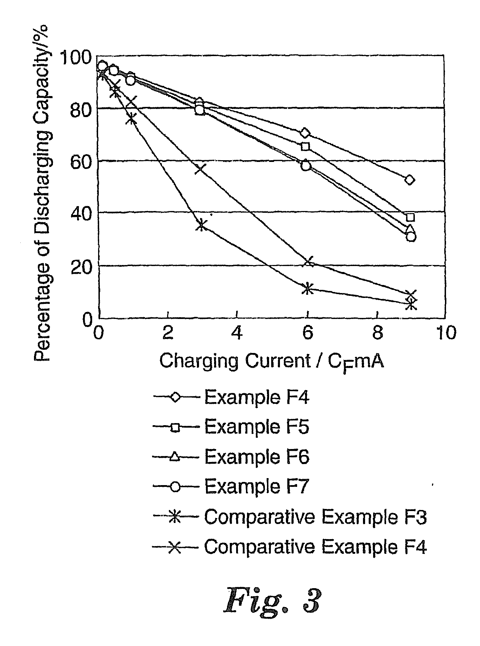

Using the same batteries, charging was performed at 25°C with a constant current corresponding to 0.2 C_{F}mA, 0.5 C_{F}mA, 1 C_{F}mA, 3 C_{F}mA, 6 C_{F}mA or 9 C_{F}mA until the battery voltage reached 4.2 V and then a pause was taken for 10 minutes. Thereafter, discharging was performed with a constant current corresponding to 0.5 C_{F}mA until the battery voltage became 2.5 V, and the discharging capacity was measured. Fig. 3 shows the relationship between the charging current and the obtained discharging capacity.

As apparently seen from Fig. 3, in Examples using a fluorinated ether of the present invention, even when large-current charging, that is, rapid charging is performed, the discharging capacity obtained thereafter is very excellent.

### G. Low-Temperature Discharging Property Test

### Examples G4 to G7 and Comparative Examples G3 and G4:

The batteries tested in Examples F4 to F7 and Comparative Examples F3 and F4 were continuously used in this test as batteries of Examples G4 to G7 and Comparative Examples G3 and G4, respectively. Constant-current charging of 0.5 C_{D}mA was performed at 25°C and after the voltage reached 4.2 V, constant-voltage charging of 4.2 V was performed. The total charging time was controlled to 3 hours. After the completion of charging, a pause was taken for 10 minutes. Subsequently, discharging was performed with a constant current of 0.5 C_{D}mA until the voltage became 2.5 V and then a pause was taken for 10 minutes. This charging/discharging operation was repeated 5 times and it was confirmed that the battery was stably undergoing the charging/discharging operation. The discharging capacity at 5th operation was measured, as a result, in all batteries tested, the discharging capacity was from 116 to 127 mAh in terms of the capacity per g of lithium cobaltate as the positive electroactive material. The discharging capacity at this time was taken as 100% and used as a standard value in the subsequent constant-current charging rate test.

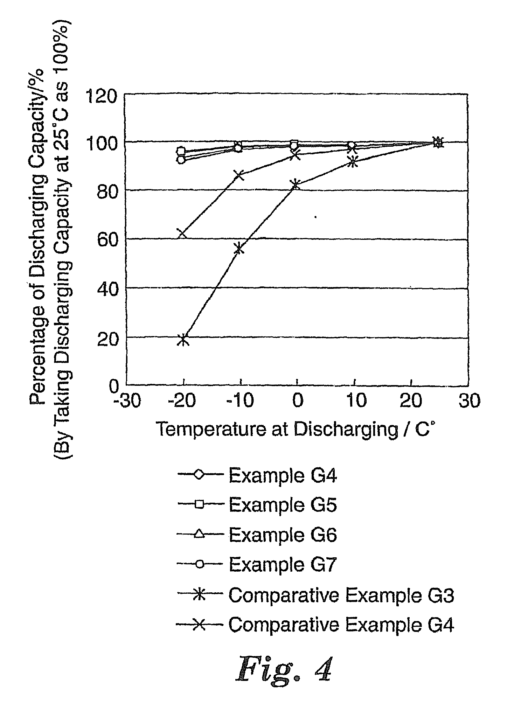

Using same batteries, charging was performed at 25°C under the same conditions as above and then the temperature in the environment where the battery was placed was changed to a predetermined temperature. In this state, the battery was left standing for 1 hour. Thereafter, discharging was performed with a constant current corresponding to 0.5 C_{D}mA until the voltage became 2.5 V, and the discharging capacity was measured. Fig. 4 shows the relationship between the temperature at the discharging and the obtained discharging capacity.

As apparently seen from Fig. 4, in Examples using a fluorinated ether of the present invention, the discharging capacity at low temperatures is very excellent.

### H. Charging/Discharging Cycle Test

### Examples H1 to H3 and Comparative Examples H1 and H2:

Out of batteries used in Example E, the batteries tested in Examples E1 to E3 and Comparative Examples E1 and E2 were continuously used in this test as batteries of Examples H1 to H3 and Comparative Examples H1 and H2, respectively. Each battery was subjected to constant-current charging of C_{D}mA at 25°C and after the voltage reached 4.2 V, to constant-voltage charging of 4.2 V. The total charging time was controlled to 3 hours. After the completion of charging, a pause was taken for 10 minutes. Subsequently, constant-current discharging was performed with a current of 0.5 C_{D}mA until the voltage became 2.5 V and then a pause was taken for 10 minutes. This charging/discharging operation was taken as 1 cycle and repeated 220 cycles.

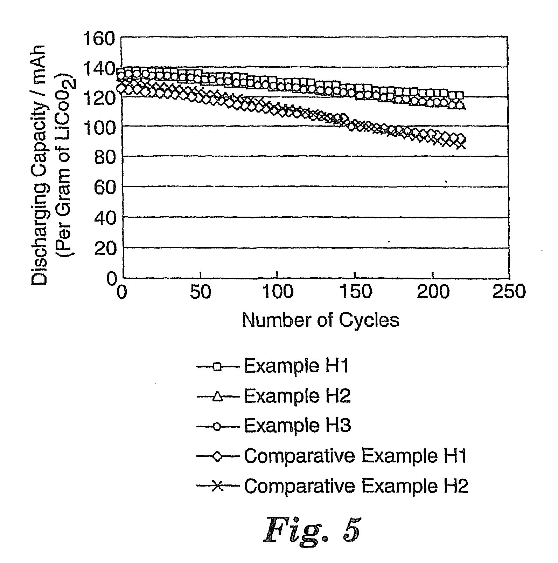

As apparently seen from Fig. 5, in Examples using a fluorinated ether of the present invention, the cycle property when charging/discharging is repeated is excellent as compared with Comparative Examples.

## Claims

1. A non-aqueous mixed solvent for use in a non-aqueous electrolytic solution for electrochemical energy devices, comprising:
at least on aprotic solvent, and
at least one fluorinated ether having a boiling point of 80°C or more, represented by the formula:
R₂-O-(R_{f2}-O)ₙ-R₃ (formula 2)
wherein R₂ and R₃ each is independently an alkyl group having from 1 to 4 carbon atoms, which may be branched, R_{f2} is a fluorinated alkylene group having from 3 to 10 carbon atoms, which may be branched, and n is an integer of 1 to 3.

2. The non-aqueous mixed solvent of claim 1 wherein said aprotic solvent is at least one member selected from the group consisting of ethylene carbonate, propylene carbonate, butylene carbonate, a carbonic acid ester represented by the formula: RₓOCOOR_{y} (wherein Rₓ and R_{y} may be the same or different and each is a linear or branched alkyl group having from 1 to 3 carbon atoms), γ-butyrolactone, 1,2-dimethoxyethane, diglyme, triglyme, tetraglyme, tetrahydrofuran, an alkyl-substituted tetrahydrofuran, 1,3-dioxolane, an alkyl-substituted 1,3-dioxolane, tetrahydropyran and an alkyl-substituted hydropyran.

3. The non-aqueous mixed solvent of either claim 1 or 2 wherein said fluorinated ether is at least one member selected from CH₃-O-C₆F₁₂-O-CH₃ and CH₃-O-C₃F₆-O-C₃F₆-O-CH₃.

4. The non-aqueous mixed solvent of any one of claims 1 to 3 further comprising an organic compound which has at least one fluorine atom and which may contain any atom of B, N, O, Si, P and S in addition to a carbon atom.

5. The non-aqueous mixed solvent of claim 4 wherein said organic compound is a completely fluorinated organic compound.

6. The non-aqueous mixed solvent of claim 5 wherein said completely fluorinated compound is either a perfluoroketone or a perfluorocarbon.

7. A non-aqueous electrolytic solution for electrochemical energy devices, obtained by dissolving an ion-dissociable supporting electrolyte in the non-aqueous mixed solvent claimed in any one of claims 1 to 6.

8. The non-aqueous electrolytic solution of claim 7 wherein said ion-dissociable supporting electrolyte is a salt represented by the formula: XY wherein X is one or multiple member(s) selected from the group consisting of a compound represented by the formula: (RfₐSO₂)(Rf_{b}SO₂)N⁻ wherein Rfₐ and Rf_{b} may be the same or different and each is a linear or branched fluorinated alkyl group having from 1 to 4 carbon atoms; a compound represented by the formula: (Rf_{c}SO₂)(Rf_{d}SO₂)(RfₑSO₂)C⁻ wherein Rf_{c}, Rf_{d} and Rfₑ may be the same or different and each is a linear or branched fluorinated alkyl group having from 1 to 4 carbon atoms; a compound represented by the formula Rf_{f}SO₃⁻ wherein Rf_{f} is a linear or branched fluorinated alkyl group having from 1 to 4 carbon atoms; PF₆⁻; ClO₄⁻; BF₄⁻; and AsF₆⁻, and Y is one or multiple kinds of cation(s).

9. The non-aqueous electrolytic solution of any of claim 7 or 8 wherein Y is Li⁺.

10. An electrochemical energy device comprising an anode and an electrode in contact with a non-aqueous electrolytic solution of any of claims 7 to 9.
